## Europäisches Patentamt

## European Patent Office

## Office européen des brevets

(19)

(11) Veröffentlichungsnummer: **0 021 363**
**A1**

(12)

# EUROPÄISCHE PATENTANMELDUNG

(21) Anmeldenummer: **80103452.1**

(22) Anmeldetag: **20.06.80**

(51) Int. Cl.³: **G 03 B 27/12**, G 03 B 21/11

(30) Priorität: **29.06.79 DE 2926313**

(43) Veröffentlichungstag der Anmeldung: **07.01.81**
**Patentblatt 81/1**

(84) Benannte Vertragsstaaten: **BE FR GB IT**

(71) Anmelder: **AGFA-GEVAERT Aktiengesellschaft, Camera-Werk Patent- und Lizenzwesen Postfach, D-8000 München 90 (DE)**

(72) Erfinder: **Schuhmeir, Eugen, Rheingoldstrasse 1a, D-8014 Neubiberg (DE)**
Erfinder: **Rauffer, Walter, Kurt-Eisner-Strasse 41, D-8000 München 83 (DE)**
Erfinder: **Schiffl, Heinz, Doebrastrasse 2, D-8000 München 90 (DE)**

(54) **Verfahren zur Belichtungssteuerung eines Mikrofilm-Lese-Kopiergerätes sowie Mikrofilm-Lese-Kopiergerät zur Durchführung des Verfahrens.**

(57)    In einem Mikrofilm-Lese-Kopiergerät ist eine Einrichtung zum Steuern der auf die lichtempfindliche Oberfläche (1) der Kopiereinrichtung auftreffenden Kopierlichtmenge in Abhängigkeit von der Helligkeit der zu kopierenden Mikrofilm-Vorlage (17) vorgesehen. Die Vorlagenhelligkeit wird hierbei erfindungsgemäß vor oder beim Auslösen des Kopiervorganges im Bereich des Lese-Projektionsstrahlenganges (30), beispielsweise hinter einem teildurchlässigen Umlenkspiegel (28), gemessen.

CW 2288.8 PM/MM

0021363

# AGFA-GEVAERT AG

## LEVERKUSEN

CAMERA-WERK MÜNCHEN
**PATENTABTEILUNG**

CW 2288.8 PM/MM                    10-re-ja  28. 6. 1979

1617A

**Verfahren zur Belichtungssteuerung eines Mikrofilm-Lese-Kopiergerätes sowie Mikrofilm-Lese-Kopiergerät zur Durchführung des Verfahrens**

Die Erfindung betrifft ein Verfahren zur Steuerung der auf die lichtempfindliche Oberfläche einer Kopiereinrichtung eines Mikrofilm-Lese-Kopiergerätes auftreffenden Kopierlichtmenge in Abhängigkeit von der Helligkeit der zu kopierenden Vorlage sowie ein Mikrofilm-Lese-Kopiergerät zur Durchführung des Verfahrens.

- 2 -

Es sind Mikrofilm-Lese-Kopiergeräte auf dem Markt, bei denen die der optischen Dichte des jeweils verwendeten Mikrofilmträgers optimal angepaßte Kopierlichtmenge manuell in Stufen oder kontinuierlich einstellbar ist. Ein solches Einstellen der jeweils optimalen Kopierlichtmenge erfordert jedoch entweder eine große diesbezügliche Erfahrung der Bedienungsperson; oder aber es sind in aller Regel eine oder mehrere Versuchskopien erforderlich, bis die eine optimale Kopienqualität ergebende Kopierlichtmenge richtig eingestellt ist.

Aus der DE-PS 25 18 787 ist ein Mikrofilm-Rückvergrößerungsgerät mit einer automatischen Steuerung der Kopierlichtmenge bekannt, wobei im bzw. am Rande des Kopierstrahlenganges Fotoselektoren angeordnet sind, die die Helligkeit des verwendeten Filmmaterials messen und hierdurch über einen die Stromzufuhr der Beleuchtungslampen unterbrechenden Schalter die Belichtungsdauer der Beleuchtungslampen steuern. Das Gerät gemäß der vorgenannten Patentschrift eignet sich nicht zum Einsatz von Wechselobjektiven, da die Detektoren neben der Objektiveinrichtung angeordnet sind und daher die unterschiedlichen optischen Eigenschaften von Wechselobjektiven bei der Ermittlung der erforderlichen Kopierlichtmenge keine Berücksichtigung finden.

Erfindungsemß ist nunmehr vorgesehen, daß die Helligkeit der Vorlage vor oder beim Auslösen des Kopiervorganges im Bereich des Lese-Projektionsstrahlenganges gemessen wird. Hierdurch ist es möglich, bereits beim Positionieren des Mikrobildes oder beim Betrachten des Mikrobildes die Vorlagenhelligkeit zu messen und zu speichern, so daß beim Auslösen des Kopiervorganges die Steuergröße bereits vorliegt.

Vorzugsweise werden gemäß einem weiteren Erfindungsmerkmal mehrere Punkte der Vorlage selektiv abgetastet und der hierbei auftretende Minimal- bzw. Maximalwert, je nach Verwendung von Positiv- oder Negativfilm, wird zur Steuerung der Kopierlichtmenge verwendet.

Ein Mikrofilm-Lese-Rückvergrößerungsgerät zur Durchführung des Verfahrens mit einer Beleuchtungseinrichtung zum Beleuchten eines ausgewählten Mikrobildes, einer ersten Projektionseinrichtung zur Projektion des ausgewählten Mikrobildes auf einen Betrachtungsschirm und einer zweiten Projektionseirichtung zur Projektion des ausgewählten Mikrobildes auf eine lichtempfindliche Oberfläche einer Kopiereinrichtung ist erfindungsgemäß dadurch gekennzeichnet, daß im Bereich der ersten Projektionsrichtung eine Meßeinrichtung zum Messen der Hintergrundhelligkeit des projizierten Mikrobildes angeordnet ist und daß eine Steuervorrichtung vorgesehen ist zum Steuern der auf die lichtempfindliche Oberfläche auftreffenden Lichtmenge aufgrund der in der Meßeinrichtung erzeugten Signale. Vorteilhafterweise weisen die erste Projektionseinrichtung und die zweite Projektionseinrichtung ein gemeinsames Objektiv auf, wobei die Meßeinrichtung in Richtung des Projektionsstrahlenganges gesehen hinter dem Objektiv angeordnet ist, so daß bei Verwendung von Wechselobjektiven, Drehprismen, Filtern und dergleichen der Lichtverlust in der Objektiveinrichtung immer automatisch ausgeglichen wird.

Vorzugsweise umfaßt die erste Projektionseinrichtung einen Umlenkspiegel, der optisch teildurchlässig ist, wobei hinter dem Umlenkspiegel mindestens ein die Helligkeit eines oder mehrerer Bereiche des projizierten Mikrobildes abtastendes lichtempfindliches Element, vorzugsweise im Bereich der Spiegelmitte, angeordnet ist.

Weitere vorteilhafte Merkmale der Erfindung sind den übrigen Unteransprüchen im Zusammenhang mit der nachfolgenden Beschreibung zu entnehmen, in der die Erfindung anhand der Zeichnung näher erläutert wird. In der Zeichnung zeigen:

Figur 1    einen Schnitt durch ein Mikrofilm-Lese-Rückvergrößerungsgerät mit einer Meßeinrichtung gemäß der Erfindung und

Figur 2    ein Blockschaltbild der Belichtungssteuerung für ein Gerät gemäß Figur 1.

- 5 -

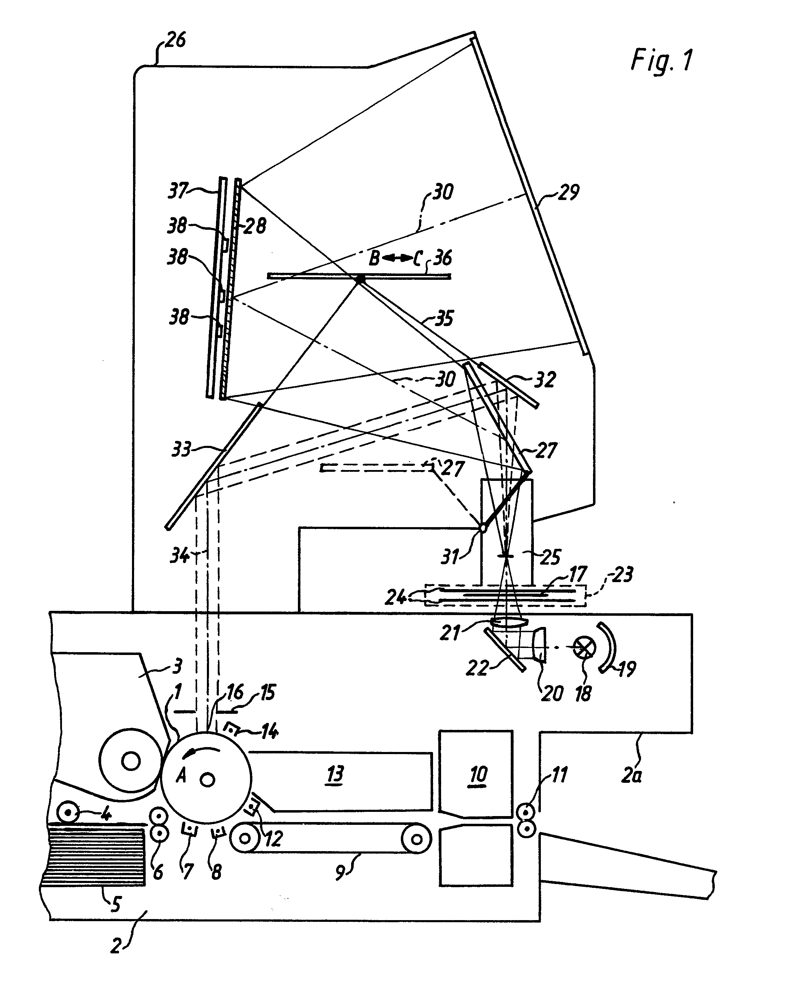

In Figur 1 ist in einem unteren Gehäuseteil 2 eines Mikrofilm-Lese-Rückvergrößerungsgerätes eine Kopiereinheit untergebracht. Diese Kopiereinheit umfaßt eine fotosensible Kopiertrommel 1, um die herum die üblichen Bearbeitungsstationen eines elektrofotografischen Kopiergerätes angeordnet sind. Das auf der Kopiertrommel befindliche elektrostatische Ladungsbild wird in einer Entwicklungseinrichtung 3 entwickelt. Über einen Rollenanleger 4 werden im Kopiertakt einzelne Kopieträger eines Blattstapels 5 über ein Einzugswalzenpaar 6 an den Umfang der Kopiertrommel 1 herangeführt. Im Bereich eines Übertragungscorotrons 7 wird das in der Entwicklungseinrichtung 3 durch Toner eingefärbte Ladungsbild auf den Kopieträger übertragen. Ein Abnahmecorotron 8 erleichtert das Abnehmen des Kopieträgers von der Trommel 1, von der der Kopieträger, der nun das Pulverbild trägt, über ein Transportband 9 von der Kopiertrommel 1 weg zu einer Fixiereinrichtung 10, in der das Pulverbild auf dem Kopieträger eingeschmolzen wird, transportiert wird. Von hier aus wird der Kopieträger über ein Auslaufwalzenpaar 11 in ein Ablagefach 12 abgelegt. In Umlaufrichtung A der Kopiertrommel 1 gesehen hinter dem Abnahmecorotron 8 ist am Umfang der Kopiertrommel ein Reinigungscorotron 12 und im Anschluß daran eine Reinigunseinrichtung 13 zum Reinigen der Kopiertrommeloberfläche von Resttoner vorgesehen. Im Anschluß an die Reinigungseinrichtung 13 befindet sich ein Aufladecorotron 14, das die Kopiertrommeloberfläche gleichmäßig mit elektrischer Ladung belegt. Durch eine Feldblende 15 wird ein parallel zur Kopiertrommelachse verlaufender, spaltförmiger Belichtungsbereich 16 definiert.

In einem dem Gerätebenutzer zugewandten pultartigen Gehäuseteil 2 a des unteren Gehäuseteils 2 ist eine Beleuchtungseinrichtung für den zu projizierten Ausschnitt eines Mikrofiches 17 untergebracht. Die Beleuchtungseinrichtung umfaßt eine Beleuchtunglampe 18, einen Refelektor 19, Kondensorlinsen 20 und 21 sowie einen Umlenkspiegel 22. Auf der Oberseite des pultartigen Gehäuseteils 2 a ist eine Mikrofichebühne 23, auf der zwischen zwei transparenten Platten 24 das Mikrofiche 17 gehalten wird, in bekannter Weise in zwei Koordinatenrichtungen verschieblich gelagert. Ein überhalb der Mikrofichebühne angeordnetes, vorzugsweise in bekannter Weise schwimmend gelagertes Abbildungsobjektiv 25 projiziert das abzubildende Mikrobild über im Inneren eines oberen Gehäuseteils 26 angeordnete Umlenkspiegel 27, 28 auf eine dem Gerätebenutzer zugewandte Projektionsfläche 29, auf der ein vergrößertes Bild des Mikrobildes entsteht. Der Verlauf des Projektionsstrahlenganges zum Betrachten des Mikrobildes ist durch die mit der Bezugsziffer 30 bezeichnete strichpunktierte Linie angedeutet.

- 7 -

Der Umlenkspiegel 27 ist um die Achse 31 zwischen zwei
Endstellungen, von denen eine in Figur 1 durchgezogen und
die andere gestrichelt eingezeichnet ist, verschwenkbar
gelagert. In seiner gestrichelt eingezeichneten Position
ist der Spiegel 27 aus dem Strahlengang herausgeschwenkt,
so daß das Abbildungsstrahlenbündel auf den Spiegel 32
trifft, der den Strahlengang über den Umlenkspiegel 33
auf die Kopiertrommel 1 umlenkt. Der Verlauf des Kopierstrahlenganges ist durch die strichpunktierte Linie 34
angedeutet.

Die Spiegel 32 und 33 sind auf einem Winkelspiegelträger 35 im rechten Winkel zueinander angeordnet. Der
Winkelspiegelträger 35 ist an Führungsstangen 36 gelagert
und in einer zur Ebene des Mikrofiches 17 parallelen
Ebene in Pfeilrichtung B-C zum streifenweisen Abtasten
des zu kopierenden Bildes synchron mit der Bewegung der
Kopiertrommel 1 verschieblich.

Weitere Einzelheiten des Geräteaufbaus sind beispielsweise der DE-OS ............ (P 29 15 512.2) der Anmelderin zu entnehmen, in der die Funktionsweise des Gerätes
im einzelnen dargelegt ist.

Um einwandfreie, kontrastreiche Kopien zu erhalten, ist
die Konstanz der auf die Kopiertrommel auftreffenden
Lichtmenge von großer Bedeutung. Schwankungen von ca.
20 Lux führen bereits zu Über- oder Unterbelichtung der

-8-

Kopie mit Auflösungs- und Kontrastminderung. Zur Messung der optischen Vorlagendichte ist daher hinter dem Umlenkspiegel 28, der teildurchlässig verspiegelt ist mit einem Durchlaßkoeffizienten von ca. 10 %, auf einer Trägerplatte 37 eine Gruppe von Fotodetektoren 38 angeordnet. Diese Detektoren tasten das auf den Bildschirm 29 projizierte Bild nach dessen maximaler (bei Positivfilmen) bzw. minimaler (bei Negativfilmen) Helligkeit ab. Die spektrale Anpassung der Detektoren an die spektrale Empfindlichkeit der Kopiertrommel erfolgt über den Detektoren vorgeschaltete Filter.

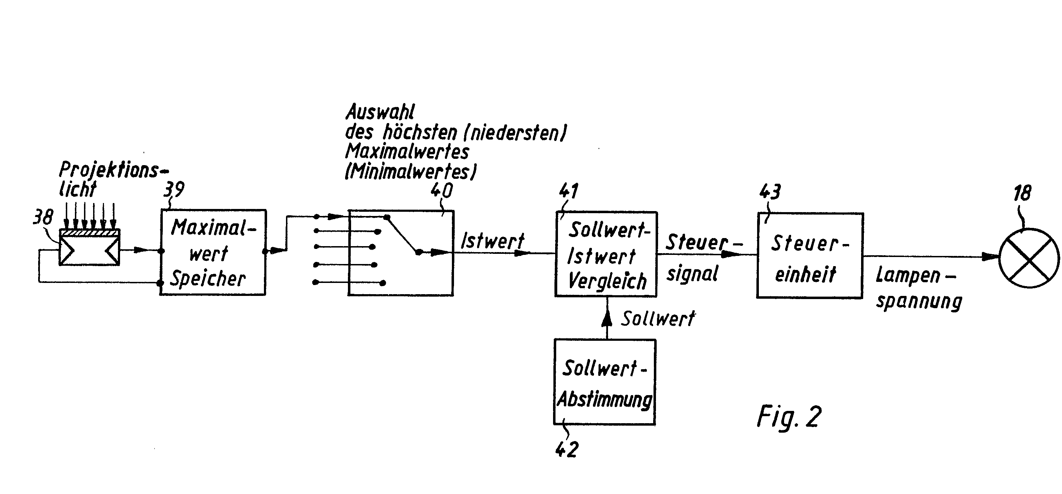

Die Funktionsweise der Belichtungssteuerung ist schematisch in Figur 2 dargestellt. Der Maximalwert des in den Detektoren 38 aufgefangenen Projektionslicht wird einem Maximalwertspeicher 39 zugeführt. Die Maximalwerte werden entweder bereits beim Positionieren des Mikrobildes ermittelt oder auch vom bereits in Projektionsposition befindlichen Mikrobild. Von den mit den verschiedenen Detektoren ermittelten Maximalwerten wird mittels der Einrichtung 40 der höchste Maximalwert (bzw. der niedrigste Minimalwert bei Negativ-Filmen) ausgewählt. Dieser Maximalwert wird in bekannter Weise in einer Vergleichsschaltung 41 mit dem über eine Einrichtung 42 vorwählbaren Sollwert verglichen. Hieraus wird ein Steuersignal gebildet, das über die Steuereinheit 43 die Lampenspannung der Projektionslampe 18 steuert. Selbstverständlich kann über die Steuereinheit alternativ auch ein Verschluß zur Zeitsteuerung der Projektionslampe oder eine variable Blende gesteuert werden.

Bei Betätigung der Kopiertaste des Gerätes ist somit die der Belichtungssteuerung zugrundeliegende Größe, nämlich die maximale bzw. minimale Helligkeit des Mikrobildes bzw. des Mikrofiches, bereits ermittelt. Die Steuerung der Steuergröße, also z. B. der Lampenspannung, kann unmittelbar nach Feststellen eines Maximalwertes oder aber auch beim Auslösen der Kopiertaste erfolgen.

Hierzu 2 Blatt Zeichnungen.

CW 2288.8 PM/MM

10-re-ja  28. 6. 1979

1617A

## Ansprüche

1. Verfahren zur Steuerung der auf die lichtempfindliche Oberfläche einer Kopiereinrichtung eines Mikrofilm-Lese-Kopiergerätes auftreffenden Kopierlichtmenge in Abhängigkeit von der Helligkeit der zu
kopierenden Vorlage, dadurch gekennzeichnet, daß die
Helligkeit der Vorlage (17) vor oder beim Auslösen
des Kopiervorganges im Bereich des Lese-Projektionsstrahlenganges (30) gemessen wird.

2. Verfahren nach Anspruch 1, dadurch gekennzeichnet,
daß mehrere Punkte der Vorlage (17) selektiv abgetastet werden und daß der hierbei auftretende Minimal- bzw. Maximalwert zur Steuerung der Kopierlichtmenge verwendet wird.

3. Mikrofilm-Lese-Rückvergrößerungsgerät mit einer Beleuchtungseinrichtung zum Beleuchten eines ausgewählten Mikrobildes, einer ersten Projektionseinrichtung zur Projektion des ausgewählten Mikrobildes
auf einen Betrachtungsschirm und einer zweiten Projektionseinrichtung zur Projektion des ausgewählten
Mikrobildes auf eine lichtempfindliche Oberfläche
einer Kopiereinrichtung, dadurch gekennzeichnet, daß
im Bereich der ersten Projektionseinrichtung
(18 - 25, 25 - 29) eine Meßreinrichtung (38) zum
Messen der Untergrundhelligkeit des projizierten Mikrobildes angeordnet ist und daß eine Steuervorrichtung (39 - 43) vorgesehen ist zum Steuern der auf
die lichtempfindliche Oberfläche auftreffenden
Lichtmenge aufgrund der in der Meßeinrichtung erzeugten Signale.

4. Mikrofilm-Lese-Rückvergrößerungsgerät nach Anspruch 3, dadurch gekennzeichnet, daß die erste Projektionseinrichtung einen Umlenkspiegel (28) umfaßt,
der optisch teildurchlässig ist, und daß hinter dem
Umlenkspiegel mindestens ein die Helligkeit eines oder mehrerer Bereiche des projizierten Mikrobildes abtastendes lichtempfindliches Element (38) angeordnet ist.

5. Mikrofilm-Lese-Rückvergrößerungsgerät nach Anspruch 4, dadurch gekennzeichnet, daß die lichtempfindlichen Elemente im Bereich der Spiegelmitte angeordnet sind.

6. Mikrofilm-Lese-Rückvergrößerungsgerät nach einem der Ansprüche 3 bis 5, dadurch gekennzeichnet, daß die Steuervorrichtung die Helligkeit der Beleuchtungslampe (18) zum Beleuchten des ausgewählten Mikrobildes steuert.

7. Mikrofilm-Lese-Rückvergrößerungsgerät nach einem der Ansprüche 3 - 6, dadurch gekennzeichnet, daß die erste Projektionseinrichtung und die zweite Projektionseinrichtung ein gemeinsames Objektiv (25) aufweisen und daß die Meßeinrichtung (38) in Richtung des Projektionsstrahlenganges gesehen hinter dem Objektiv angeordnet ist.

8. Verfahren nach Anspruch 2, dadurch gekennzeichnet, daß die Vorlage während ihrer Positionierung abgetastet wird.

Fig. 1

Fig. 2

Projektions-licht

38

39 Maximal-wert Speicher

Auswahl des höchsten (niedersten) Maximalwertes (Minimalwertes)

40

Istwert

41 Sollwert-Istwert Vergleich

Steuer-signal

43 Steuer-einheit

Lampen-spannung

18

Sollwert

42 Sollwert-Abstimmung

# EUROPÄISCHER RECHERCHENBERICHT

**0021363**

Nummer der Anmeldung

EP 80 10 3452.1

Europäisches Patentamt

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | Patents Abstracts of Japan Band 3, Nr. 54, 10. Mai 1979, Seite 108 E109 & JP - A - 54 - 33037 | 1,2,4 |
| | -- | |
| | US - A - 4 153 364 (K. SUZUKI et al.) * Ansprüche 1, 2; Fig. 9 * | 1,2 |
| | -- | |
| | DE - U - 7 541 572 (HOECHST) * Anspruch 1; Fig. * | 4 |
| | -- | |
| D | DE - C2 - 2 518 787 (HOECHST) | |
| | -- | |
| A | DE - A1 - 2 840 722 (MINOLTA CAMERA) * Fig. 9 * | |
| | ---- | |

### KLASSIFIKATION DER ANMELDUNG (Int.Cl.3)

G 03 B 27/12
G 03 B 21/11

### RECHERCHIERTE SACHGEBIETE (Int. Cl.3)

G 03 B 21/00
G 03 B 27/00
G 03 G 15/04

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 11-09-1980 | HOPPE |

EPA form 1503.1 06.78